(19) Europäisches Patentamt
European Patent Office
Office européen des brevets

(11) Publication number : **0 474 512 A2**

(12) **EUROPEAN PATENT APPLICATION**

(21) Application number : **91308183.2**

(22) Date of filing : **06.09.91**

(51) Int. Cl.[5] : **C08L 27/08,** C08L 79/02, // (C08L27/08, 79:02), (C08L79/02, 27:08)

(30) Priority : **07.09.90 GB 9019610**

(43) Date of publication of application : **11.03.92 Bulletin 92/11**

(84) Designated Contracting States : **DE ES FR GB IT**

(71) Applicant : **W.R. Grace & Co.-Conn.**
**1114 Avenue of the Americas**
**New York New York 10036 (US)**

(72) Inventor : **Gillio-Tos, Mario**
**Via Le Giovanni XXIII No. 40**
**I-20014 Nerviano (MI) (IT)**
Inventor : **Mugnai, Giorgio**
**Via Castellazzo No. 15**
**I-20017 Rho (MI) (IT)**

(74) Representative : **Bentham, Stephen et al**
**J.A. Kemp & Co. 14 South Square Gray's Inn**
**London, WC1R 5LX (GB)**

(54) **Polymer mixture.**

(57) The invention provides a polymer composition comprising polyvinylidene chloride and polyethyloxazoline. The composition possesses an unusual combination of characteristics ; the inclusion of polyethyloxazoline in the polyvinylidene chloride causes a substantial increase in moisture permeability with no substantial change in permeability to oxygen or carbon dioxide. The polyethyloxazoline is highly miscible with the polyvinylidene chloride and reduces melt viscosity. The combination of properties is indicative of utility as a packaging film.

EP 0 474 512 A2

This invention relates to a polymer composition which comprises polyvinylidene chloride and polyethyloxazoline.

The use of poly-2-oxazolines, preferably, polyethyloxazoline, in adhesive compositions is described in US Patent No. 4741970. The compositions additionally comprise a glycol and a grafted polypropylene and are useful for adhering laminates. The compositions provide excellent adhesion and resistance to delamination.

US Patent No. 4474928 describes the incorporation of a poly-2-oxazoline, eg. poly(2-ethyl-2-oxazoline) into a polyolefine in order to improve the adhesion of the polyolefine to various substrates.

It has now been discovered that polyethyloxazoline is highly miscible with polyvinylidene chloride and that the resulting polymer compositions possess an unusual combination of properties. The effect of the incorporation of polyethyloxazoline is to reduce the melt viscosity of polyvinylidene chloride and to increase the moisture permeability. The oxygen and carbon dioxide permeability are not substantially changed.

The present invention accordingly provides a polymer composition which comprises polyvinylidene chloride and polyethyloxazoline. The composition generally comprises from 5% to 75%, more preferably from 15 to 50%, by weight, of polyethyloxazoline.

The polyvinylidene chloride is preferably a copolymer with vinyl chloride or methyl acrylate. PEOX 200 is preferred as the polyethyloxazoline.

The term "polyvinylidene chloride" or PVDC as used herein includes vinylidene chloride copolymers such as those sold under the brand name "Saran" sold by Dow Chemical Company of the United States. Such copolymers usually comprise at least 50% of vinylidene chloride monomer with, as the comonomer, vinyl chloride or methyl acrylate or another suitable comonomer. Polyvinylidene chloride is known as a barrier film having low permeability to oxygen.

The term "polyethyloxazoline" as used herein indicates a polymer obtained by ring-opening polymerization of 2-ethyl-2-oxazoline, for example, the polymer sold commercially under the brand name PEOX 200 by Dow Chemical Company of the United States. PEOX 200 is a water-soluble, thermally stable, film-forming polymer: it is a tertiary amide polymer produced by the cationic ring opening of 2-ethyl-2-oxazoline.

The polymerisation proceeds in accordance with the scheme:

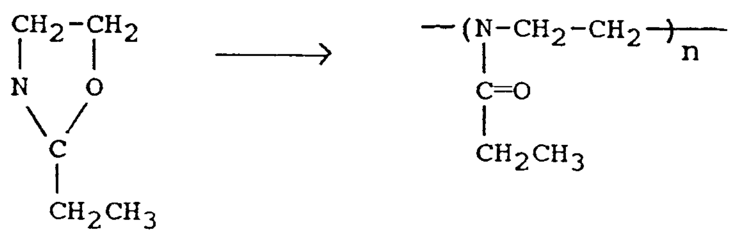

The PEOX polymer is very readily miscible with PVDC, up to 75% PEOX and 25% PVDC. As to the effect of incorporating a PEOX polymer in PVDC on the properties of the resulting composition, by way of example the addition of 25% PEOX 200 has the following effects:

(1) The melt viscosity of the PVDC is reduced by about 50%.

(2) The permeability of the PVDC to oxygen and carbon dioxide is substantially unchanged.

(3) The permeability to moisture of the PVDC is increased by about forty fold.

(4) The resulting material is not water soluble but the PVDC has better dispersibility.

The mixture, therefore, has unusual properties combining good barrier properties to oxygen and carbon dioxide with very high permeability to moisture. This combination is the opposite to that of polyolefines in which a high permeability to oxygen and carbon dioxide is associated with low permeability to moisture. The reduced melt viscosity may facilitate processing of the composition.

This unusual combination of physical properties is indicative of utility in packaging, for example, medical applications, casings and the curing of non-gassing cheeses such as parmesan. According to a further feature of the invention there is provided a packaging film comprising a composition as hereinbefore described which comprises polyvinylidene chloride and polyethyloxazoline.

The new compositions may be used as a monolayer film or as a multilayer film. Multilayer films can be made either by coextruding the composition of the invention with, for example between, other polymeric layers or by forming the composition in either flat or tubular form and then extrusion coating additional polymeric materials onto it.

The following Example illustrates the invention.

EXAMPLE

PEOX 200 and PVDC were dry blended and extruded on a Brabender extruder. A melt from the mixture obtained was hot blown. The physical properties of the unshrinkable film thus obtained were measured and are given in the following Table:

GAS BARRIER PROPERTIES OF (VDC-VC) CO. AND PEOX

PERMEABILITY TO

| % PEOX | OXYGEN CARBON DIOX. ml.25μ/m².day atm at 23°C | | | | MOISTURE |
|---|---|---|---|---|---|
| | 0% RH | 90% RH | 0% RH | 100% RH | gr/m².day 39°C,100%RH |
| 0 | 8 | 8 | n.a. | n.a. | 10-(barrier bag) |
| 10 | 7 | 8 | 7 | 14 | 20 |
| 20 | 9 | 10 | n.a. | n.a. | 278 |
| 25 | 11 | 14 | 20 | 23 | 435 |
| 50 | 25 | 34 | 50 | 97 | n.a. |
| 75 | 100 | * | 338 | n.a. | n.a. |
| 100 | 1050 | * | 7600 | * | n.a. |

* = Disintegrates or solubilizes during test.

The PVDC used had the following composition:

| | | |
|---|---|---|
| IXAN WV 323 | (an emulsion type VDC-VC from Solvay) | : 86.0% |
| IXAN PV 858 | (a suspension type VDC-VC from Solvay) | : 10.0% |
| EPIXOTE 828 | (an epoxy resin from Shell: thermal stabilizer) | : 4.0% |

**Claims**

1. A composition which comprises polyvinylidene chloride and polyethyloxazoline.

2. A composition according to claim 1 which, comprises from 5% to 75% by weight of polyethyloxazoline.

3. A composition according to claim 1 whch comprises from 15 to 50% by weight of polyethyloxazoline.

4. A composition according to claim 1, 2 or 3 in which the polyethyloxazoline is PEOX 200.

5. A composition according to any one of claims 1 to 4 in which the polyvinylidene chloride is a copolymer

of vinylidene chloride and vinyl chloride.

**6.** A composition according to any one of claims 1 to 4 in which the polyvinylidene chloride is a copolymer of vinylidene chloride and methyl acrylate.

**7.** A monolayer film comprising a composition according to any one of claims 1 to 6.

**8.** A multilayer film comprising a composition according to any one of claims 1 to 6.

**9.** A package comprising a film according to claim 7 or 8.